# EUROPEAN PATENT APPLICATION

(11) **EP 4 819 359 A1**
(43) Date of publication of application: **07.10.2026**
(21) Application number: 25736262.4
(22) Date of filing: 02.01.2025
(51) Int. Cl.: H01M 50/528, H01M 50/531, B23K 37/04, B23K 20/10

(54) **TAB GUIDE ALIGNMENT APPARATUS AND METHOD FOR ALIGNING TAB GUIDE BY USING SAME**

(30) Priority: 05.01.2024 KR 20240001963
(71) Applicant: LG Energy Solution, Ltd., Seoul 07335 (KR)
(72) Inventor: SHIM, Sung Joon, Daejeon 34122 (KR); AN, Hye Ryeon, Daejeon 34122 (KR); KIM, Kyung Joo, Daejeon 34122 (KR)
(74) Representative: Plasseraud IP
(86) International application number: PCT/KR2025/000059
(87) International publication number: WO 2025/147108

(57) **Abstract**

According to exemplary embodiments, a tab guide alignment apparatus is provided. The apparatus includes: a first rail; and an align block that is coupled to the rail, wherein the align block includes a second rail configured to move in a first direction relative to the first rail and a tab guide contact part coupled to the second rail.

## Description

### [Technical Field]

The technical ideas of the present disclosure relate to a tab guide alignment apparatus and a method for aligning a tab guide using the apparatus. This application claims the benefit of Korean Patent Application No. 10-2024-0001963, filed on January 5, 2024, the disclosure of which is incorporated herein by reference.

### [Background]

Unlike primary batteries, secondary batteries can be charged and discharged a plurality of times. Secondary batteries are widely used as an energy source for a variety of wireless devices, including handsets, laptops, and cordless vacuum cleaners. Recently, as the manufacturing cost of electric hybrid electric vehicles (HEVs) and battery electric vehicles (BEVs) has decreased dramatically due to improved energy density and economies of scale, and as the range of BEVs has increased to match that of fueled vehicles, the primary use of secondary batteries has shifted from mobile devices to mobility.

The battery cell is the most fundamental unit of a secondary battery, and improving the mechanical and electrical performance of the battery cell is the most effective and key factor in improving secondary battery performance.

### [Summary]

### [Technical Problem]

The problem addressed by the technical ideas of the present disclosure is to provide a tab guide alignment apparatus with increased reliability and a method of aligning tab guides using the apparatus.

### [Technical Solution]

According to exemplary embodiments of the technical ideas of the present disclosure to address the above problems, a tab guide alignment apparatus is provided. The apparatus includes: a first rail; and an align block that is coupled to the rail, wherein the align block comprises a second rail configured to move in a first direction relative to the first rail and a tab guide contact part coupled to the second rail.

The tab guide contact part is configured to align tab guides of an ultrasonic welding device.

The align block further includes an align contact part coupled to the second rail.

The tab guide contact part protrudes in the first direction relative to the align contact part.

The align block further includes a position adjuster interposed between the second rail and the align contact part and coupled to each of the second rail and the align contact part.

The position adjuster is configured to move the align contact part in a second direction.

The apparatus further includes a vernier caliper coupled to the align contact part.

The vernier caliper indicates a position of the align contact part.

According to exemplary embodiments, a tab guide alignment method is provided. The method includes: aligning a first tab guide; moving a tab guide contact part; and aligning a second tab guide, wherein aligning the first tab guide comprises adjusting a position of the first tab guide in a first direction such that the first tab guide contacts a tab guide contact part of an align block of a tab guide alignment apparatus.

The tab guide alignment apparatus further includes a first rail, the align block is coupled to the first rail, the align block comprises a second rail configured to move in a first direction relative to the first rail, wherein the tab guide contact part is coupled to the second rail.

The align block further includes an align contact part coupled to the second rail, and the tab guide contact part protrudes further in the first direction relative to the align block.

The method further includes aligning the align block by contacting the align contact part with a datum block.

The align contact part is aligned prior to aligning the first tab guide.

Moving the tab guide contact part includes moving the tab guide contact part in a second direction perpendicular to the first direction.

Aligning the second tab guide includes adjusting a position of the second tab guide in the first direction such that the second tab guide contacts the tab guide contact part.

### [Advantageous Effects]

According to exemplary embodiments of the present invention, a tab guide alignment apparatus and a method for aligning tab guides using the apparatus may be provided to improve the accuracy of a tab guide adjustment process that relies on operator skill. Accordingly, the reliability of a pre-welding process may be improved.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

### [Brief Description of the Drawings]

FIG. 1 is a drawing to illustrate a secondary battery manufacturing apparatus according to exemplary embodiments.
FIG. 2 is a perspective view to illustrate a tab guide alignment apparatus according to other exemplary embodiments.
FIG. 3 is a perspective view to illustrate an align block of the tab guide alignment apparatus.
FIG. 4 is a flowchart to illustrate a method for aligning a tab guide, according to exemplary embodiments.
FIG. 5 is a perspective view to illustrate a method for aligning a tab guide, according to exemplary embodiments.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment: Apparatus)

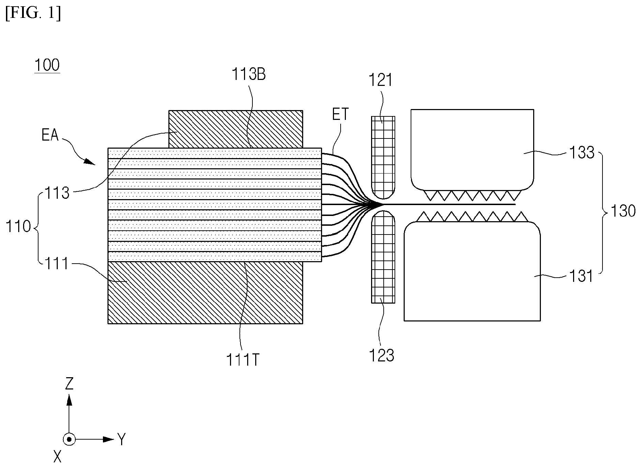

FIG. 1 is a drawing to illustrate a secondary battery manufacturing apparatus 100, according to exemplary embodiments.

According to exemplary embodiments, the secondary battery manufacturing apparatus 100 may be configured to weld the electrode tabs ET of the electrode assembly EA. According to exemplary embodiments, the secondary battery manufacturing apparatus 100 may weld the electrode tabs ET using ultrasonics. The welding of the tabs ET is one of the key processes that determines the performance of the electrode assembly EA, as incomplete welding of the tabs ET may result in reduced capacity of the battery cell including the electrode assembly EA.

The secondary battery manufacturing apparatus 100 may include a fixing module 110, first and second tab guides 121, 123, and a processing module 130. The fixing module 110 may include a support plate 111 and a pressing device 113. The processing module 130 may include a horn 133 and an anvil 131.

An electrode assembly EA may include a plurality of electrodes. Each of the plurality of electrodes may be one of a positive electrode and a negative electrode. Accordingly, each of the plurality of electrodes of the electrode assembly may include one of a positive tab and a negative tab. Accordingly, the electrode assembly EA may include a plurality of electrode tabs ET.

According to exemplary embodiments, the welding by the secondary battery manufacturing apparatus 100 may be pre-welding. Due to the recent increase in energy density of secondary batteries, the number of electrodes being welded has increased significantly, with dozens or more electrode tabs ET being welded simultaneously. To reliably weld a large number of electrode tabs ET, the welding of a plurality of electrode tabs ET may include two steps: pre-welding and main welding. As a non-limiting example, the pre-welding may be ultrasonic welding and the main welding may be laser welding.

After pre-welding of the plurality of electrode tabs ET, the plurality of electrode tabs ET may be welded together with electrode leads. The electrode leads may be external connection terminals of a battery cell. Here, the battery cell is the basic unit of a lithium-ion battery, i.e., a secondary battery. In addition to the electrode assembly EA, a battery cell includes an electrolyte and a case. Battery cells are classified into lithium-ion cells, lithium-ion polymer cells, lithium polymer cells, and lithium polymer cells according to the composition of the electrode assembly EA and electrolyte. Lithium-ion polymer cells are gaining share in secondary batteries due to their low potential for electrolyte spillage and ease of manufacturing.

Based on the shape of the cell case, battery cells are classified as cylindrical cells, where the electrode assembly EA is embedded in a cylindrical metal can, prismatic cells, where the electrode assembly EA is embedded in a prismatic metal can, and pouch-type cells, where the electrode assembly EA is embedded in a pouch case of aluminum laminated sheet.

An electrode assembly EA includes a positive electrode, a negative electrode, and a separator interposed between the positive electrode and negative electrode. Electrode assemblies EA are categorized into jelly-roll type and stack-type based on their assembly form. The jelly-roll type is a wound positive electrode, a negative electrode, and a separator interposed between them. The stack-type includes a plurality of positive electrodes and negative electrodes stacked in sequence, and a plurality of separators interposed between them.

The positive electrode can include a positive electrode current collector and a positive electrode active material. The negative electrode can include a negative electrode current collector and a negative electrode active material.

The thickness of the positive electrode current collector ranges from about 3 µm to about 500 µm. The positive electrode current collector may have a high conductivity and may not cause chemical changes in the final manufactured secondary battery. The positive electrode current collector may include, for example, stainless steel, aluminum, nickel, titanium, calcined carbon and aluminum. The positive electrode current collector may also include stainless steel with a surface treated with carbon, nickel, titanium, silver, or the like. The surface of the positive electrode current collector may include a micro-irregular structure to increase adhesion of the active material. The positive electrode current collector may have the shape of a film, sheet, foil, net, porous, foam, nonwoven, or the like.

The thickness of the negative electrode current collector ranges from about 3 µm to about 500 µm. The negative electrode current collector may not cause chemical changes in the final manufactured secondary battery and may have a high conductivity. The negative electrode current collector may include copper, stainless steel, aluminum, nickel, titanium, calcined carbon, and aluminum-cadmium alloys. The negative electrode current collector may also include stainless steel with a surface treated with carbon, nickel, titanium, silver, or the like. The surface of the negative electrode current collector may include a micro-irregular structure to increase adhesion of the active material. The negative electrode current collector can have the shape of a film, sheet, foil, net, porous, foam, nonwoven, or the like.

A positive electrode active material is a substance that can cause an electrochemical reaction. The positive electrode active material may be a lithium transition metal oxide. The positive electrode active material may be, for example, a layered compound such as lithium cobalt oxide (LiCoO₂) and lithium nickel oxide (LiNiO₂) substituted with one or more transition metals; a lithium manganese oxide substituted with one or more transition metals; a lithium nickel-based oxide represented by the formula LiNi_{1-y}M_{y}O₂ (where M is any one of Co, Mn, Al, Cu, Fe, Mg, B, Cr, Zn, and Ga, and 0.01≤y≤0.7); a lithium nickel cobalt manganese complex oxide represented by the formula Li_{1+z}Ni_{b}Mn_{c}Co_{1-(b+c+d)}M_{d}O₍₂₋ₑ₎Aₑ such as Li_{1+z}Ni_{1/3}Co_{1/3}Mn_{1/3}O₂, Li_{1+zN}i_{0.4}Mn_{0.4}Co_{0.2}O₂ (where, -0.5≤z≤0.5, 0.1≤b≤0.8, 0.1≤c≤0.8, 0≤d≤0.2, 0≤e≤0.2, b+c+d<1, M is any one of Al, Mg, Cr, Ti, Si, and Y, and A is any one of F, P, and Cl); an olivine-based lithium metal phosphate represented by the formula Li₁₊ₓM_{1-y}M'_{y}PO_{4-z}X_{z} (where M is a transition metal, more specifically any one of Fe, Mn, Co and Ni, M' is any one of Al, Mg and Ti, X is any one of F, S and N, -0.5≤x≤+0.5, 0≤y≤0.5, and 0≤z≤0.1).

The negative electrode active material may include carbon, e.g., anthracite, non-graphitized carbon, graphitized carbon, etc. The negative electrode active material may include a metal complex oxides such as for example, LiₓFe₂O₃(0≤x≤1), LixWO₂(0≤x≤1), SnₓMe₁₋ₓMe'_{y}O_{z} (where Me is any one of Mn, Fe, Pb, and Ge, and Me' is any one of Al, B, P, Si, periodic 1, 2, 3 elements, and halogens; 0<x≤1; 1≤y≤3; 1≤z≤8). The negative electrode active material may include, for example, a lithium metal; a lithium alloy; a silicon-based alloy; a tin-based alloy. The negative electrode active material may include a metal oxide, e.g., SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, etc. The negative electrode active material may include, for example, a conductive polymer such as polyacetylene; a Li-Co-Ni based material; or the like.

The support plate 111 may be configured to support the electrode assembly EA. The electrode assembly EA may be disposed on the upper surface 111T of the support plate 111. The upper surface 111T of the support plate 111 may abut the electrode assembly EA.

In the following, the support plate 111 defines two directions substantially parallel to the upper surface 111T as the X direction and the Y direction, and a direction substantially perpendicular to the upper surface 111T of the support plate 111 as the Z direction. Each of the X direction, the Y direction, and the Z direction may be substantially perpendicular to each other. Unless otherwise defined, the orientations described above are the same in all drawings. The Z direction may be the direction in which the positive electrode, negative electrode, and separators of the electrode assembly EA are stacked. The Y direction may be the direction in which the electrode tabs ET protrude from the electrode assembly EA.

A lower surface 113B of the pressing device 113 may abut the electrode assembly EA. The pressing device 113 may be configured to apply pressure to the electrode assembly EA. The pressing device 113 may be configured to apply pressure to the electrode assembly EA in conjunction with the support plate 111, thereby fixing the electrode assembly EA. The electrode assembly EA may be held in place by the pressure exerted by the support plate 111 and the pressing device 113, a vertical drag force, and a frictional force induced by the vertical drag force.

The first and second tab guides 121, 123 may be spaced apart from each other in the Z direction. Each of the first and second tab guides 121, 123 may be configured to move in the Z direction. The first and second tab guides 121, 123 may be interposed between the fixing module 110 and the processing module 130.

The first and second tab guides 121, 123 may collect a plurality of electrode tabs ET. The first and second tab guides 121, 123 may be configured to change the shape of the plurality of electrode tabs ET. The shape of each of the plurality of electrode tabs ET may be changed to include a rounded portion (or, a U-shaped portion) by movement of the first and second tab guides 121, 123 in the Z direction. By changing the shape of the plurality of electrode tabs ET by the first and second tab guides 121, 123, damage to the plurality of electrode tabs ET in subsequent processing of the electrode assembly EA may be prevented, and the reliability of manufacturing the secondary battery may be improved.

The position of the first and second tab guides 121, 123 in the Y direction determines the shape of the plurality of electrode tabs ET during pre-welding of the plurality of electrode tabs ET, and accurate positioning of the first and second tab guides 121, 123 in the Y direction is critical for process consistency and quality of the electrode assembly EA.

While the plurality of electrode tabs ET is being welded by the secondary battery manufacturing apparatus 100, an anvil 131 may be configured to support the plurality of electrode tabs ET. According to exemplary embodiments, the anvil131 may be a Supporting Jig. The anvil 131 may be configured to fix the plurality of electrode tabs ET in position such that energy delivered by the horn 133 can be efficiently transferred to the plurality of electrode tabs ET. The anvil 131 may include any of a knurled shape and a ribbed shape for fixing the plurality of electrode tabs ET.

The horn 133 may be configured to provide ultrasonic energy to the plurality of electrode tabs ET. The frequency of the ultrasonic waves provided to the plurality of electrode tabs ET by the horn 133 may be in the range of about 18000 Hz to about 1 GHz. The horn may include a converter to convert AC power or DC power to mechanical vibrations, and a booster to amplify the mechanical vibrations. The ultrasonic energy may generate frictional heat in the plurality of electrode tabs ET, whereby the plurality of electrode tabs ET may be welded.

The horn 133 may be an ultrasonic resonator and may include a repeating structure with a spatial period that is half the ultrasonic wavelength, equal to the ultrasonic wavelength, or an integer multiple of the ultrasonic wavelength. The repeating unit structure of the horn 133 may include any of a knurled shape and a ribbed shape. As a non-limiting example, the horn 133 may include an aluminum alloy, a titanium alloy, and a dies steel.

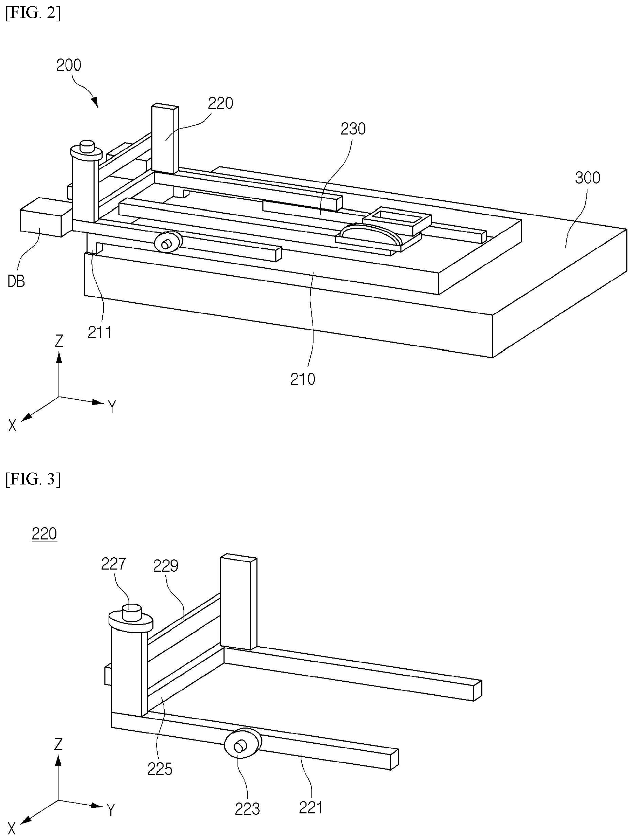

FIG. 2 is a perspective view to illustrate a tab guide alignment apparatus 200, in accordance with other exemplary embodiments.

FIG.3 is a perspective view to illustrate the align block 220 of the tab guide alignment apparatus 200.

Referring to FIGS. 1 through 3, the tab guide alignment apparatus 200 may include a first rail 210, an align block 220, and a vernier caliper 230. The tab guide alignment apparatus 200 may be used to align the first and second tab guides 121, 123. The tab guide alignment apparatus 200 may be used to align of the positions of the first and second tab guides 121, 123 in the Y direction.

The first rail 210 may include fixtures 211 for fixing the tab guide alignment apparatus 200 to the LMS 300. The LMS 300 may include a transfer rail and a pallet configured to move along the transfer rail. The first rail 210 may be fixed to a pallet of the LMS 300.

An align block 220 may be coupled to the first rail 210. The align block 220 may include a second rail 221, a rail fixator 223, an align contact part 225, a position adjuster 227, and a tab guide contact part 229.

The second rail 221 may be coupled to the first rail 210. The second rail 221 may be configured to move along the first rail 210. The first rail 210 may extend along the Y direction. The second rail 221 may be configured to move along the Y direction.

The rail fixator 223 may be configured to fix the second rail 221 and the first rail 210. The rail fixator 223 may be configured to fix a relative position of the second rail 221 and the first rail 210. After the second rail 221 is moved so that the tab guide contact part 229 is in position, the second rail 221 may be fixed to the first rail 210 by the rail fixator 223. As a non-limiting example, the fixator 1223 may include a fixing bolt.

The align contact part 225 may be coupled to the second rail 221. The align contact part 225 may be welded to the second rail 221 or coupled by mechanical means, such as bolting. The align contact part 225 may also be provided integrally with the second rail, such as by casting.

The align contact part 225 may be configured to contact the datum block DB. By moving the align block 220 in the Y direction such that the align contact part 225 contacts the datum block DB, the align block 220 may be positioned. More specifically, when the align contact part 225 contacts the datum block DB, the tab guide contact part 229 may be positioned to align the first and second tab guides 121, 123.

The tab guide contact part 229 may be coupled to the position adjuster 227. The position adjuster 227 may be configured to adjust the position of the tab guide contact part 229 in the Z direction. The position adjuster 227 may be coupled to the second rail 221. The position adjuster 227 may be interposed between the second rail 221 and the tab guide contact part 229. The position adjuster 227 may be coupled to an end of the second rail 221 in the Y direction. The position adjuster 227 may extend in the Z direction.

The vernier caliper 230 may be coupled to the align block 220. The vernier caliper 230 may be configured to measure the position of the align block 220 in the Y direction. Accordingly, after alignment of the align block 220, if the alignment of the align block 220 is thrown out of alignment by repeated alignment of the first and second tab guides 121, 123, the align block 220 can be realigned based on the reading of the vernier caliper 230.

### (Second embodiment: Method)

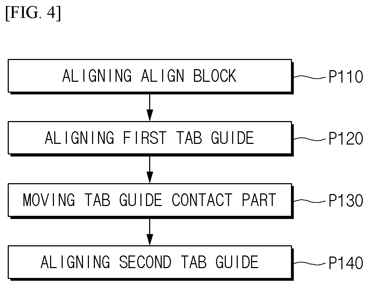

FIG. 4 is a flowchart to illustrate a method for aligning a tab guide, according to exemplary embodiments.

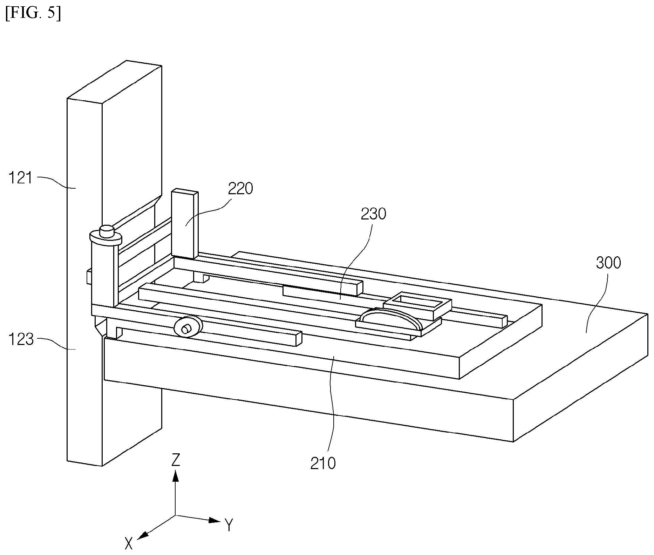

FIG. 5 is a perspective view to illustrate a method for aligning a tab guide, according to exemplary embodiments.

Referring to FIGS. 2 through 4, at P110, the align block 220 may be aligned. Aligning the align block 220 may include moving the align block 220 in the Y direction such that the align contact part 225 contacts the datum block DB. After aligning the align block 220, a reference position (e.g., a zero point) of the vernier caliper 230 may be established. That is, the home position of the align block 220 may be the reference position (e.g., zero point) of the vernier caliper 230.

Next, referring to FIGS. 3 through 5, the first tab guide 121 can be aligned at P120. Aligning the first tab guide 121 may include adjusting a position of the first tab guide 121 in the Y direction (i.e., moving the first tab guide 121 in the Y direction) such that the first tab guide 121 contacts the tab guide contact part 229.

Next, at P130, the tab guide contact part 229 may be moved. The tab guide contact part 229 may be moved in the Z direction. The tab guide contact part 229 may be moved from a position for alignment of the first tab guide 121 to a position for alignment of the second tab guide 123. The tab guide contact part 229 may be moved by in response to movement of the position adjuster 227. The motion of the position adjuster 227 may be based on manual operation by an operator, or may be based on the motion of a servo motor and screw.

Subsequently, at P140, the second tab guide 123 can be aligned. Aligning the second tab guide 123 may include adjusting a position of the second tab guide 123 in the Y direction (i.e., moving the second tab guide 123 in the Y direction) such that the second tab guide 123 contacts the tab guide contact part 229.

In FIG. 4, the second tab guide 123 is shown to be aligned after aligning the first tab guide 121, but this is for illustrative purposes only and does not in any way limit the technical ideas of the present disclosure. That is, the first tab guide 121 may be aligned after the second tab guide 123 is aligned.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present disclosure.

## Claims

1. A tab guide alignment apparatus comprising:
a first rail; and
an align block that is coupled to the rail, wherein the align block comprises a second rail configured to move in a first direction relative to the first rail and a tab guide contact part coupled to the second rail.

2. The tab guide alignment apparatus of claim 1, wherein
the tab guide contact part is configured to align tab guides of an ultrasonic welding device.

3. The tab guide alignment apparatus of claim 1, wherein
the align block further comprises an align contact part coupled to the second rail.

4. The tab guide alignment apparatus of claim 3, wherein
the tab guide contact part protrudes in the first direction relative to the align contact part.

5. The tab guide alignment apparatus of claim 1, wherein
the align block further comprises a position adjuster interposed between the second rail and the align contact part and coupled to each of the second rail and the align contact part.

6. The tab guide alignment apparatus of claim 5, wherein
the position adjuster is configured to move the align contact part in a second direction.

7. The tab guide alignment apparatus of claim 1, further comprising:
a vernier caliper coupled to the align contact part.

8. The tab guide alignment apparatus of claim 7, wherein
the vernier caliper indicates a position of the align contact part.

9. A tab guide alignment method comprising:
aligning a first tab guide;
moving a tab guide contact part; and
aligning a second tab guide, wherein
aligning the first tab guide comprises adjusting a position of the first tab guide in a first direction such that the first tab guide contacts a tab guide contact part of an align block of a tab guide alignment apparatus.

10. The tab guide alignment method of claim 9, wherein
the tab guide alignment apparatus further comprises a first rail,
the align block is coupled to the first rail,
the align block comprises a second rail configured to move in a first direction relative to the first rail, wherein
the tab guide contact part is coupled to the second rail.

11. The tab guide alignment method of claim 10, wherein
the align block further comprises an align contact part coupled to the second rail, and
the tab guide contact part protrudes further in the first direction relative to the align block.

12. The tab guide alignment method of claim 11, further comprising:
aligning the align block by contacting the align contact part with a datum block.

13. The tab guide alignment method of claim 12, wherein
the align contact part is aligned prior to aligning the first tab guide.

14. The tab guide alignment method of claim 9, wherein
moving the tab guide contact part comprises moving the tab guide contact part in a second direction perpendicular to the first direction.

15. The tab guide alignment method of claim 9, wherein
aligning the second tab guide comprises adjusting a position of the second tab guide in the first direction such that the second tab guide contacts the tab guide contact part.
